Europäisches Patentamt

European Patent Office

Office européen des brevets

(19)

(11) Numéro de publication: **0 093 055**
**B1**

# FASCICULE DE BREVET EUROPÉEN

(12)

(45) Date de publication du fascicule du brevet:
23.07.86

(51) Int. Cl.⁴: **G 21 C 7/12**

(21) Numéro de dépôt: **83400804.7**

(22) Date de dépôt: **22.04.83**

(54) **Dispositif anti-éjection déblocable pour barres de contrôle de réacteur nucléaire.**

(30) Priorité: **26.04.82 FR 8207139**

(43) Date de publication de la demande:
**02.11.83 Bulletin 83/44**

(45) Mention de la délivrance du brevet:
**23.07.86 Bulletin 86/30**

(84) Etats contractants désignés:
**BE CH DE GB IT LI NL**

(56) Documents cité:
**DE-A-2 605 534**
**FR-A-2 051 600**
**FR-A-2 075 928**
**FR-A-2 178 783**
**FR-A-2 432 197**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Belz, Gérard, Les Micocouliers, F-83560 Vinon sur Verdon (FR)**

(74) Mandataire: **Mongrédien, André, c/o BREVATOME 25, rue de Ponthieu, F-75008 Paris (FR)**

EP 0 093 055 B1

LIBER, STOCKHOLM 1986

## Description

La présente invention a pour objet un dispositif anti-éjection déblocable pour barres de contrôle de réacteur nucléaire.

Les mécanismes de commande des barres de contrôle de réacteurs nucléaires pressurisés sont généralement logés dans une enceinte étanche, résistante à la pression. La pression qui règne à l'intérieur de cette enceinte étanche est égale à la pression qui règne à l'intérieur du réacteur. Elle est donc de plusieurs dizaines de bars.

Au cas où pour une cause quelconque l'étanchéité d'une telle enceinte serait rompue, il s'en suivrait une dépressurisation rapide. Cette dépressurisation aurait pour conséquence l'apparition d'une différence de pression entre l'intérieur de l'enceinte et l'intérieur de la cuve du réacteur. Cette différence de pression provoquerait une poussée considérable sur la barre de contrôle et son mécanisme de commande, et tendrait à éjecter la barre de contrôle hors du coeur du réacteur.

C'est pourquoi on prévoit sur les réacteurs nucléaires pressurisés des dispositifs visant à empêcher l'éjection des barres de contrôle en cas de dépressurisation de l'enceinte contenant le mécanisme de commande sollicitant ces barres à sortir du coeur du réacteur.

On connaît un grand nombre de dispositifs anti-éjection pour barres de contrôle de réacteurs nucléaires. On trouvera des exemples de mécanismes de ce type dans les documents FR—A—2432197 et FR—A—2 075 928. Ces dispositifs comportent un mécanisme de commande de la translation de la barre de contrôle logé dans une enceinte étanche solidaire du couvercle de la cuve du réacteur, des moyens anti-éjection de la barre de contrôle et enfin des moyens de commande des moyens anti-éjection sensibles à une cause externe tendant à solliciter la barre de contrôle à sortir du coeur du réacteur.

Plus précisément, le FR—A—2432197, comporte un moto-réducteur qui entraîne un rotor en rotation par l'intermédiaire d'un coupleur électromagnétique. Les moyens anti-éjection sont constitués par un crabot dont la couronne externe est solidaire de l'enceinte qui contient le mécanisme de commande de la translation de la barre de contrôle et dont la couronne interne est solidaire du rotor. Au cas où le crabot resterait bloqué, aucune force exercée notamment par le motoréducteur sur le rotor ne permettrait de débloquer ce dernier.

Le FR—A—2 075 928 décrit un mécanisme pour obtenir la translation d'une barre de contrôle au moyen de deux éléments moteurs, un élément supérieur et un élément inférieur, munis chacun d'un verrou qui s'engage dans des saillies annulaires de la barre de contrôle. Les éléments moteurs sont déplacés alternativement et en opposition de phase au moyen d'électroaimants entre deux butées.

Des moyens anti-éjection sont constitués par un cliquet monté pivotant et dont une extrémité s'engage dans les saillies annulaires de la barre de contrôle. Un manchon coulissant et qui est poussé vers le bas par un ressort 74 permet de dégager le cliquet afin de permettre un mouvement vers le bas d'introduction dans le coeur de la barre de contrôle. Si le cliquet reste engagé dans les saillies annulaires, aucune force de traction exercée sur la barre de contrôle ne permettra d'escamoter ce cliquet. Par conséquent, il n'existe pas de seuil de résistance des moyens anti-éjection au-delà duquel cette force externe exercée sur ces moyens permet de les effacer pour assurer une manoeuvre de la barre de contrôle.

Ainsi, les dispositifs anti-éjection de l'art antérieur ne permettent pas de faire sortir la barre de contrôle hors du coeur du réacteur au cas où les moyens anti-éjection resteraient bloqués.

La présente invention a précisément pour objet un dispositif anti-éjection qui remédie à ces inconvénients. Ce dispositif interdit l'éjection de la barre de contrôle aussi longtemps qu'un effort externe inférieur à une valeur déterminée n'est pas exercé sur la barre de contrôle. Cette valeur limite est déterminée en fonction des efforts susceptibles d'être exercés sur la barre de contrôle en cas de cause externe accidentelle. Cependant, si le mécanisme anti-éjection reste en position bloquée, il est toutefois possible de faire sortir la barre de contrôle du coeur en exerçant sur la barre de commande un effort externe supérieur à la valeur limite.

Plus précisément, le réacteur nucléaire comportant une cuve, un coeur situé à l'intérieur de la cuve et au moins une enceinte étanche solidaire de la cuve, au moins une barre de commande à laquelle est fixée au moins une barre de contrôle, et un système de manoeuvre de ladite barre de commande, ce système de manoeuvre exerçant une force sur ladite barre de commande pour l'introduire dans et la sortir du coeur du réacteur, un dispositif anti-éjection de la barre de contrôle, ce dispositif comprenant des moyens pour bloquer la barre de commande par rapport à ladite enceinte étanche, se caractérisé en ce que lesdits moyens pour bloquer la barre de commande par rapport à l'enceinte étanche la bloquent aussi longtemps que l'effort exercé sur cette barre reste inférieur à une valeur limite, cette valeur étant au moins égale à l'effort exercé sur la barre de commande en cas de cause externe accidentelle sollicitant la barre de contrôle à sortir du réacteur, le dispositif comportant des moyens pour obtenir une translation de la barre de contrôle en exerçant sur la barre de commande un effort externe supérieur à cette valeur limite.

On sait par ailleurs qu'il existe un grand nombre de mécanismes de commande pour les barres de contrôle. Ces mécanismes sont généralement commandés par un système rotatif dont le mouvement peut être transformé en déplacement linéaire par un dispositif vis-écrou ou pignon crémaillère permettant de descendre la barre de commande pour la faire pénétrer dans le coeur, ou au contraire de la remonter pour la faire sortir du coeur.

Les mécanismes de commande du type vis-écrou peuvent être répartis en deux types principaux: ceux dans lesquels la vis, fixe en translation, est entraînée en rotation et l'écrou, fixe en rotation, est libre en translation et ceux dans lesquels la vis est fixe en rotation et l'écrou fixe en translation est actionné en rotation.

La présente invention concerne plus particulièrement un dispositif anti-éjection, interdisant la remontée inopinée de la barre de contrôle, qui est situé entre le système rotatif de commande et le mécanisme qui transforme le mouvement de rotation en mouvement de translation.

L'effort exercé sur le mécanisme de commande à vis-écrou du premier ou du deuxième type est un couple. Il est donc entendu que dans la suite du texte le terme effort désigne soit une force, soit un couple.

Dans le cas de réalisation d'un mécanisme anti-éjection équipant, par exemple, un mécanisme du type à vis tournante, la barre de commande est mobile en rotation et le dispositif anti-éjection comporte des moyens pour bloquer en rotation cette barre de commande par rapport à l'enceinte étanche, aussi longtemps que le couple exercé est inférieur à une valeur limite au moins égale au couple exercé sur la barre de commande en cas de dépressurisation sollicitant la barre de contrôle à sortir du coeur du réacteur. En exerçant sur la barre de commande un couple supérieur à cette valeur limite, on peut néanmoins obtenir la translation de la barre de contrôle.

D'autres caractéristiques et avantages de l'invention apparaîtront encore à la lecture de la description qui suit d'un exemple de réalisation donné à titre purement illustratif faite en référence aux dessins annexés sur lesquels:

— la figure 1 représente une vue en coupe d'un réacteur nucléaire équipé d'un dispositif anti-éjection conforme à l'invention,
— la figure 2 représente une vue en coupe à échelle agrandie du mécanisme anti-éjection de l'invention,
— la figure 3 représente une vue éclatée de ce même mécanisme,
— les figures 4 et 5 sont des vues en coupe illustrant le fonctionnement du dispositif anti-éjection de l'invention.

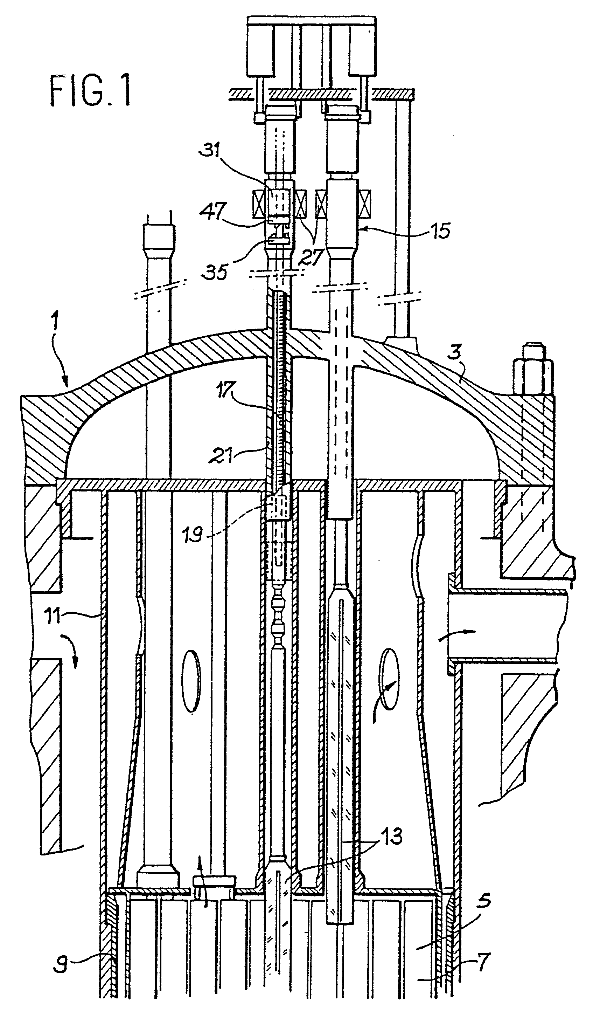

On a représenté sur la figure 1 la partie supérieure de la cuve 1 d'un réacteur nucléaire du type à eau pressurisée. La cuve 1 est fermée par un couvercle 3.

A l'intérieur de la cuve se trouve le coeur 5 constitué par des assemblages combustibles tels que 7 placés à l'intérieur d'une virole 9.

A l'intérieur de la cuve, au-dessus du coeur, se trouve une structure support 11 d'équipements internes au réacteur à travers laquelle se déplacent verticalement les barres de contrôle 13 du réacteur destinées à être introduites plus ou moins profondément dans le coeur 5.

Chacune des barres de contrôle 13 est reliée à la partie supérieure à un dispositif de commande de translation disposé à l'intérieur d'une enceinte étanche 15 solidaire du couvercle 3.

Ce dispositif de commande réalisé conformément à l'invention permet d'interdire l'éjection de la barre de contrôle 13 en cas d'accident tendant à la faire sortir du coeur 5. Mais il permet également de remonter cette barre de contrôle au cas où le dispositif anti-éjection resterait accidentellement en position bloquée.

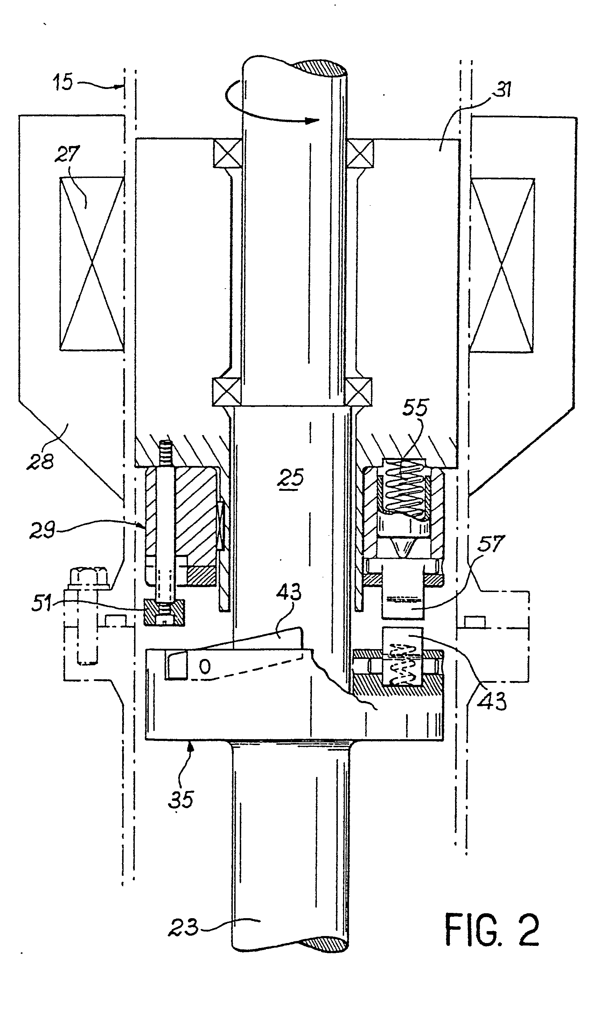

On sait qu'il existe de nombreux types de dispositifs de commande pour barres de contrôle. L'exemple de réalisation décrit sur les figures 1 à 5 est un mécanisme de commande du type vis-écrou. L'écrou 19 est bloqué en rotation et guidé en translation dans un tube 21. La vis 17 est entraînée en rotation par une barre de commande 23 visible sur la figure 2.

Comme on peut le voir sur la figure 2, le rotor 25 est solidaire de la barre de commande 23. Le mécanisme d'entraînement du rotor situé plus haut, n'a pas été représenté. La rotation du rotor 25 permet ainsi d'entraîner la vis par l'intermédiaire de la barre de commande 23. On peut ainsi déplacer à volonté en translation la barre de contrôle 13.

Le dispositif comporte en outre une masse mobile 29. Cette masse est susceptible de se déplacer en translation le long du rotor 25 entre deux positions: une position embrayée, et une position débrayée, représentée sur la figure 2.

La masse mobile 29 est en position débrayée lorsqu'il existe un champ magnétique, crée par la bobine 27. Ainsi, lorsque la bobine est alimentée, l'attraction électromagnétique s'exerce entre le bâti ou noyau 31 et la masse mobile 29 et plaque cetter dernière contre le bâti, ce qui conduit à la position débrayée représentée sur la figure 2.

Au contraire, lorsque cette attraction électromagnétique cesse, la masse mobile est poussée par les ressorts de rappel 55, dont un seul est représenté sur la figure 2, de telle sorte que la masse mobile 29 se rapproche de la roue à cliquets 35, solidaire du rotor d'entraînement 25.

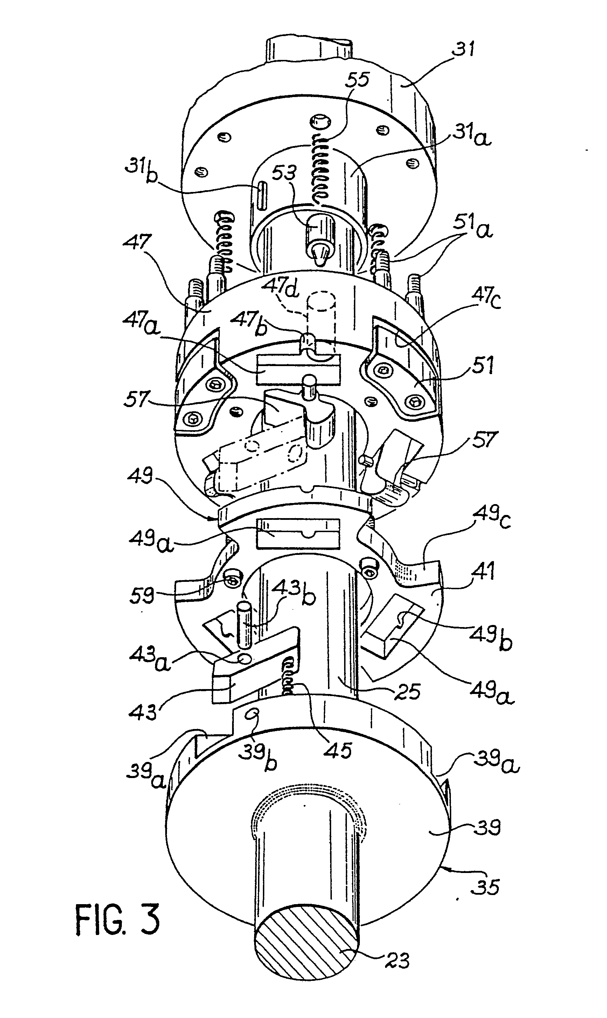

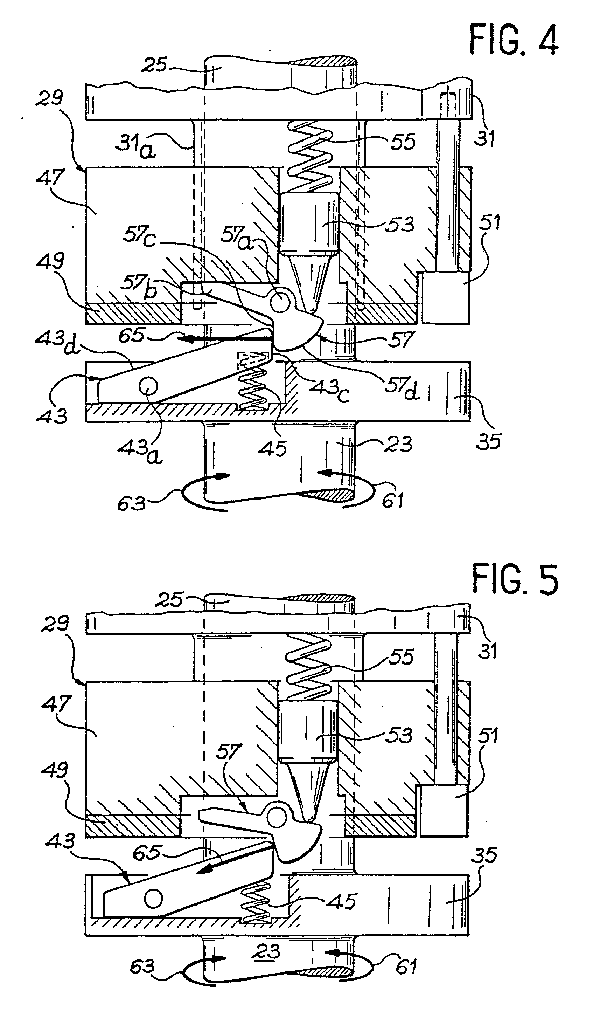

Comme on peut le voir sur les figures 3 et 4, la roue à cliquets 35 comporte trois trous cylindriques 39b orientés perpendiculairement à chacune des rainures 39a. Chaque cliquet 43 comporte un trou 43a pour son axe 43b. Le cliquet comporte un front 43c et un dos 43d. Le cliquet est poussé par un ressort faible 45. Comme on peut le voir par exemple sur les figures 4 et 5, lorsque le cliquet 43 est rappelé par le ressort 45, le front 43c est orienté approximativement selon une parallèle à l'axe du rotor 25. Le dos 43d forme au contraire un angle aigu proche de 90° avec le front 43c.

La masse mobile 29 est constituée par une couronne 47 et par un couvercle de masse mobile 49. La couronne 47 est une pièce massive d'acier de forme annulaire disposée autour du rotor 25. Elle peut se déplacer en translation le long du manchon 31a solidaire du noyau 31. La couronne est immobilisée en rotation par rapport au manchon 31a par une clavette 31b (voir figure 3).

La couronne 47 comporte trois ouvertures 47a rectangulaires situées à 120° l'une de l'autre et destinées au rochet 57. Perpendiculairement à l'ouverture 47a on trouve une demi-gorge 47b semi-cylindrique pour l'axe du rochet. La couronne 47 comporte d'autre part trois échancrures 47c disposées à 120° l'une de l'autre et intercalées entre les ouvertures 47a. Ces échancrures sont prévues pour les butées 51. Ces butées 51 sont fixées sur le noyau 31 par deux vis 51a. Les butées 51 limitent le déplacement vers le bas (selon l'orientation de la figure 3) de la couronne 47.

La couronne 47 comporte encore trois alésages 47d, dont un est visible, représentés en traits pointillés sur la figure 3. Les alésages 47d sont prévus pour les poussoirs 53 comportant un ressort de rappel 55. Les poussoirs 53 agissent sur les rochets.

Comme on peut le voir plus précisément sur les figures 4 et 5, chaque rochet 57 comporte un axe 57a qui se met en place dans la gorge 47b et dans la gorge 49b correspondante du couvercle 49 de la masse mobile.

Le rochet 57 possède un front 57c sensiblement vertical lorsque sa queue 57b est en butée contre la couronne 47. Le rochet 57 pivote autour d'un axe 57a perpendiculaire à l'axe du rotor 25. Il est rappelé en position de sortie par le ressort de rappel 55 dont la force est déterminée en fonction de la valeur du couple limite que l'on souhaite transmettre. Ce ressort est dit "ressort de rappel fort".

Le couvercle 49 de la masse mobile se présente sous la forme d'un disque qui comporte trois ouvertures 49a rectangulaires correspondant aux ouvertures 47a et qui ont pour but de permettre le pivotement des rochets 57. Sur la face supérieure du couvercle (selon l'orientation de la figure 3) on trouve trois gorges 49b correspondant aux gorges 47b pour les axes 57a du rochet. Enfin, le couvercle comporte trois échancrures 49c intercalées entre les ouvertures 47a pour le passage des trois butées 51. Le couvercle 49 est fixé à la couronne 47 par des vis 59.

Le fonctionnement du dispositif est le suivant.

La masse mobile 29 peut être déplacée entre deux positions:

— une position débrayée comme représenté sur la figure 2, et
— une position embrayée comme représenté sur les figures 4 et 5.

En position débrayée, le flux électromagnétique circule dans la carcasse en fer 28 qui entoure la bobine 27 et dans le rotor 25, ce qui attire la masse mobile 29 contre le noyau 31 et comprime les ressorts 55. Dans cette position, les rochets ne sont pas engagés avec les cliquets 43 comme on peut le voir sur la figure 2. Par suite, le rotor d'entraînement 2 est libre en rotation dans les deux sens. On peut donc descendre ou monter la barre de contrôle 13 à volonté au moyen d'un dispositif de commande indépendant du système anti-éjection et non représenté sur la figure 2.

Lorsque le flux électromagnétique cesse de circuler, la masse mobile 29 s'avance, sous l'effet du ressort de rappel 55, vers le rotor d'entraînement 2 il y a par suite engagement des rochets 57 par les cliquets 43. La course de la masse mobile 29 s'arrête lorsqu'elle arrive en contact avec les butées 51 comme représenté sur les figures 4 et 5.

Lorsque la masse mobile est en position embrayée le fonctionnement du dispositif est différent selon le sens de rotation envisagé.

Dans le sens de la flèche 61 (voir figures 4 et 5) la rotation du rotor d'entraînement 2 est possible. En effet, pour ce sens de rotation, le dos incliné 43d des cliquets entre en contact avec le dos arrondi 57d des rochets. Or les cliquets 43 sont rappelés par des ressorts 45, dits "ressorts faibles", dont la force est déterminée de telle manière que les cliquets puissent s'effacer facilement. Par conséquent, dans le sens de rotation désigné par la flèche 61 les cliquets 43 s'effacent sans effort et la rotation est possible même pour un couple peu important. C'est ce sens de rotation qui correspond à la descente de la barre de contrôle à l'intérieur du coeur. Par conséquent, on voit que lorsque la masse mobile 29 est en position embrayée, il est possible de descendre les barres de contrôle à l'intérieur du coeur sans difficulté.

Dans le sens de rotation désigné par la flèche 63, il y a contact front contre front des rochets et des cliquets. Plus précisément, le front sensiblement vertical 43c du cliquet 43 vient au contact du front 57c, également sensiblement vertical, lorsque le rochet 57 est en position sortie, comme représenté sur la figure 4. Dans cette position, la réaction de contact du rochet sur le cliquet est pratiquement normale à la surface de contact entre les deux pièces. Cette réaction a été représentée par la flèche 65. Comme on le remarque sur la figure 4, le moment par rapport à l'axe de rotation 43a s'exerce dans le même sens que celui qui est provoqué par le ressort de rappel 45. Etant donné que le cliquet était déjà en position sortie, il ne peut aller plus loin et reste par conséquent immobile.

A ce stade deux éventualités sont possibles.

Dans un premier cas, le couple transmis par la barre de commande 23 est insuffisant pour comprimer les ressorts de rappel 55. Dans ce cas, la rotation du rotor d'entraînement 2 est interdite puisque la masse mobile est bloquée en rotation par rapport au noyau 31 par la clavette 31b, et le noyau 31 étant lui-même bloqué en rotation par rapport à l'enceinte 15. Cela signifie que si une cause externe accidentelle venait à solliciter la barre de contrôle à sortir du coeur, la masse mobile 29 étant en position embrayée comme représenté sur la figure 4, le mouvement de cette barre de contrôle serait empêché. En effet, on détermine la force des ressorts 55 de manière que les efforts nécessaires au basculement des rochets soient supérieurs aux efforts que ces derniers doivent retenir. Bien entendu, la valeur de l'effort de basculement doit être déterminée en fonction de ces efforts de manière suffisamment précise. On interdit ainsi l'éjection des barres de contrôle.

Dans le cas inverse, le couple transmis par la barre de commande 23 est suffisant pour assurer le basculement des rochets 57. Ces rochets alors, pivotent comme représenté sur la figure 5. Sous l'effet de ce pivotement la réaction 65 du rochet sur le cliquet tourne au fur et à mesure que le rochet roule sans frottement sur l'arête arrondie du cliquet. Le pivotement du rochet s'accompagne donc d'une succession d'états d'équilibre du ressort 55. Dans la position représentée sur la figure 5, la réaction 65 est dirigée approximativement vers l'axe de rotation 43a. Cette réaction dépasse ensuite cet axe 43a, ce qui inverse le sens du couple exercé par rapport à cet axe. A partir d'un certain moment, la force devient supérieur à celle qui est exercée par le ressort de rappel faible créant une instabilité de sorte que le cliquet s'efface rapidement.

Dans ces conditions, le dernier état d'équilibre obtenu est celui qui correspond au couple maximal de retenue du dispositif. Il est pratiquement indépendant du coefficient de frottement entre les matériaux du cliquet et du rochet en raison des seuls phénomènes de roulement mis en jeu au niveau du contact entre ces pièces.

On voit donc que dans cette position embrayée de la masse mobile 29, les barres de contrôle sont maintenues dans le coeur du réacteur en cas de cause accidentelle les sollicitant à sortir de celui-ci, mais que l'on peut toutefois extraire les barres de contrôle si la masse mobile refuse de se déplacer en vue du débrayage du dispositif.

En outre, le couple limite ne varie pas en fonction du coefficient de frottement des matériaux du rochet et du cliquet et donc en fonction de la température du fluide du réacteur dans laquelle ces pièces baignent.

**Revendications**

1. Réacteur nucléaire comprenant une cuve (1), un coeur (5) situé à l'intérieur de la cuve (1) et au moins une enceinte étanche (15) solidaire de la cuve (1), au moins une barre de commande (23) à laquelle est fixée au moins une barre de contrôle (13), et un système de manoeuvre de ladite barre de commande (23), ce système de manoeuvre exerçant une force sur ladite barre de commande (23) pour l'introduire dans et la sortir du coeur du réacteur, un dispositif anti-éjection de la barre de contrôle (13), ce dispositif comprenant des moyens (55, 43, 57) pour bloquer la barre de commande (23) par rapport à ladite enceinte étanche (15), caractérisé en ce que lesdits moyens (55, 43, 57) pour bloquer la barre de commande par rapport à l'enceinte étanche le bloquent aussi longtemps que l'effort exercé sur cette barre (23) reste inférieur à une valeur limite cette valeur limite étant au moins égale à l'effort exercé sur la barre de commande (23) en cas de cause externe accidentelle sollicitant la barre de contrôle (13) à sortir du réacteur, le dispositif comportant des moyens (27) pour obtenir une translation de la barre de contrôle (13) en exerçant sur la barre de commande (23) un effort externe supérieur à cette valeur limite.

2. Dispositif selon la revendication 1, caractérisé en ce que la barre de commande (23) est mobile en rotation, et en ce qu'il comporte des moyens (43, 57) pour bloquer en rotation cette barre de commande par rapport à l'enceinte étanche (15), aussi longtemps que le couple exercé est inférieur à la valeur limite, cette valeur limite étant au moins égale au couple exercé sur la barre de commande (23) en cas de cause externe accidentelle sollicitant la barre de contrôle à sortir du coeur du réacteur, le dispositif comportant des moyens (27) pour obtenir une translation de la barre de contrôle en exerçant sur la barre de commande (23) un couple supérieur à cette valeur limite.

3. Dispositif selon la revendication 1, caractérisé en ce que les moyens pour bloquer en rotation la barre de commande (23) par rapport à l'enceinte étanche (15) sont constitués par au moins un cliquet (43) monté pivotant autour d'un axe (43a) situé dans un plan perpendiculaire à l'axe de la barre de commande, cet axe (43a) étant solidaire de la barre de commande (23) et le cliquet (43) étant rappelé en position de sortie par un ressort de rappel (45) dit "ressort faible", le cliquet (43) présentant un front (43c) sensiblement parallèle à l'axe de la barre de commande et un dos (43d) faisant un angle aigu proche de 90° avec l'axe de la barre de commande, par:

— au moins un rochet (57) pivotant autour d'un axe (57a) fixe en rotation par rapport à l'enceinte (15), situé dans un plan perpendiculaire à l'axe de la barre de commande (23) et rappelé en position de sortie par un ressort de rappel (55) dont la force est déterminée en fonction de la valeur du couple limite que l'on souhaite obtenir, ce ressort (55) étant dit "ressort de rappel fort", le rochet (57) comportant un front (57c) sensiblement parallèle à l'axe de la barre de commande (23) lorsqu'il est en butée et un dos (57d) arrondi pratiquement parallèle au dos du cliquet,
— le rochet (57) engageant avec le cliquet (43).

4. Dispositif selon la revendication 3, caractérisé en ce que les rochets (57) sont montés pivotants sur une masse mobile (29) qui est déplaçable en translation le long du rotor (25) entre une position embrayée, dans laquelle les rochets (57) engagent les cliquets (43), et une position débrayée dans laquelle l'arbre de commande (23) peut tourner librement dans les deux sens.

5. Dispositif selon la revendication 4, caractérisé en ce que la translation de la masse mobile (29) est commandée au moyen d'une bobine (27) créant une force d'attraction électromagnétique, les ressorts de rappel forts (55) des rochets (57) jouant également le rôle de ressorts de rappel pour pousser la masse (29) vers le rotor d'entraînement (25).

**Patentansprüche**

1. Kernreaktor mit einem Behälter (1), einem sich im Inneren des Behälters (1) befindenden Kern (5) und wenigstens einer dichten Kammer (15), die fest mit dem Behälter (1) verbunden ist, wenigstens einem Steuerstab (23), an dem wenigstens ein Regelstab (13) angebracht ist, und einem Betätigungssystem für den Steuerstab (23), wobei dieses Betätigungssystem eine Kraft auf den Steuerstab (23) ausübt, um diesen in den Reaktorkern einzuführen und aus diesem herauszuholen, einer Katapultierverhütungseinrichtung für den Regelstab (13), wobei diese Einrichtung Mittel (55, 43, 57) zum Blockieren des Steuerstabes (23) in Bezug auf die Dichtekammer (15) aufweist, dadurch gekennzeichnet, daß diese Mittel (55, 43, 57) zum Blockieren des Steuerstabes in Bezug auf die Dichtekammer diesen so lange blockieren, wie die auf diesen Stab (23) ausgeübte Belastung unterhalb eines Grenzwertes bleibt, wobei dieser Grenzwert wenigstens gleich der im Falle einer äußeren Störfallursache auf den Steuerstab (23) ausgeübten Belastung ist, die den Regelstab (13) belastet, aus dem Reaktor auszutreten, und daß die Einrichtung Mittel (27) aufweist, um eine Verschiebung des Regelstabes (13) zu erhalten, wobei auf den Steuerstab (23) eine äußere Belastung ausgeübt wird, die größer als dieser Grenzwert ist.

2. Einrichtung nach Anspruch 1, dadurch gekennzeichnet, daß der Steuerstab (23) drehbeweglich ist und Mittel (43, 57) umfaßt, um diesen Steuerstab gegenüber einer Drehung in Bezug auf die dichte Kammer (15) so lange zu blockieren, wie das ausgeübte Drehmoment kleiner als der Grenzwert ist, wobei dieser Grenzwert wenigstens gleich einem auf den Steuerstab (23) im Falle einer äußeren Störfallursache ausgeübtes Drehmoment ist, welches den Regelstab belastet, aus dem Reaktorkern auszutreten, und daß die Einrichtung Mittel (27) umfaßt, um eine Verschiebung des Regelstabes zu erhalten, wobei auf den Steuerstab (23) ein Drehmoment ausgeübt wird, welches größer als dieser Grenzwert ist.

3. Einrichtung nach Anspruch 1, dadurch gekennzeichnet, daß die Mittel zum Blockieren des Steuerstabes (23) gegenüber einer Drehung in Bezug auf die dichte Kammer (15) gebildet sind von wenigstens einer Sperrklinke (43), die um eine sich in einer zu der Achse des Steuerstabes senkrechten Ebene befindenden Achse (43a) verschwenkbar befestigt ist, wobei diese Achse (43a) fest mit dem Steuerstab (23) verbunden ist und die Sperrklinke (43) in die Herausholstellung durch eine "schwache Feder" genannte Rückstellfeder (45) zurückgestellt ist und die Klinke (43) eine im wesentlichen zu der Achse der Steuerstange parallele Vorderseite (43c) und eine einen spitzen Winkel nahe 90° mit der Achse des Steuerstabes bildende Rückseite (43d) aufweist, von:

— wenigstens eine Klinke (57), die um eine gegenüber einer Drehung in Bezug auf die Kammer (15) festgelegte Achse (57a), die sich in einer zu der Achse des Steuerstabes (23) senkrechten Ebene befindet, verschwenkbar ist und in die Herausholstellung durch eine Rückstellfeder (55) rückgestellt ist, deren Kraft als Funktion des Wertes des Grenzdrehmomentes bestimmt ist, welches man erhalten möchte, wobei diese Feder (55) "starke Rückstellfeder" genannt ist, die Klinke (57), wenn sie sich in Anschlag befindet, eine im wesentlichen zu der Achse des Steuerstabes (23) parallele Vorderseite (57c) und eine praktisch zu der Rückseite der Sperrklinke parallele, abgerundete Rückseite (57d) aufweist und die Klinke (57) mit der Sperrklinke (43) in Eingriff steht.

4. Einrichtung nach Anspruch 3, dadurch gekennzeichnet, daß die Klinken (57) an einer bewegbaren Masse (29) verschwenkbar befestigt sind, die längs des Rotors (25) zwischen einer eingekuppelten Stellung, in der die Klinken (57) an den Sperrklinken (43) angreifen, und einer ausgekuppelten Stellung verschiebbar ist, in der sich die Steuerwelle (23) frei in beiden Richtungen drehen kann.

5. Einrichtung nach Anspruch 4, dadurch gekennzeichnet, daß die Verschiebung der bewegbaren Masse (29) mittels einer Spule (27) steuerbar ist, die eine elektromagnetische Anziehungskraft erzeugt, und daß die starken Rückstellfedern (55) der Klinken (57) auch die Rolle von Rückstellfedern spielen, um die Masse (29) in Richtung zu dem Antriebsrotor (25) zu stoßen.

**Claims**

1. Nuclear reactor comprising a confinement (1), a core (5) located within the confinement (1) and at least one fluid-tight vessel (15) fixed with respect to the confinement (1), at least one command rod (23) to which is fixed at least one control rod (13), and a manipulating system for said command rod (23), said manipulating system exerting a force on said command rod (23) to move it into and out of the core of the reactor, an anti-ejection device for the control rod (13), said device comprising means (55, 43, 57) for locking the command rod (23) with respect to said fluid-tight vessel (15), characterized in that said means (55, 43, 57) for locking the command rod with respect to the fluid-tight vessel lock it as long as the force exerted on said rod (23) remains below a limiting value, said limiting value being at least equal to the force exerted on the command rod (23) in the case of accidental external influences urging the control rod (23) out of the reactor, the device comprising means (27) providing translation of the control rod (13) by exerting on the command rod (23) an external effort greater than said limiting value.

2. A device according to Claim 1, characterized in that the command rod (23) is rotationally mobile, and in that it comprises means (43, 57) for blocking rotation of said command rod with respect to the fluid-tight vessel (15), as long as the couple exerted is less than the limiting value, said limiting value being at least equal to the couple exerted on the command rod (23) in the case of accidental external force urging the control rod to leave the reactor core, the device comprising means (27) for obtaining translation of the control rod by exerting on the command rod (23) a couple which is superior to said limiting value.

3. A device according to Claim 1, characterized in that the means for rotationally locking the command rod (23) with respect to the fluid-tight vessel (15) comprise at least one pawl (43) pivotally mounted around an axis (43a) in a plane perpendicular to the axis of the command rod, said axis (43a) being fixed with respect to the command rod (23) and the pawl (43) being urged from the exit position by a return spring (45) termed the "weak" spring", the pawl (43) having a front (43c) substantially parallel to the axis of the command rod, and a rear (43d) making an acute angle of nearly 90° with the axis of the command rod, by:

— at least one ratchet (57) pivoting around an axis (57a) which is rotationally fixed with respect to the fluid-tight vessel (15,) located in a plane perpendicular to the axis of the command rod (23) and urged from the exit position by a return spring (55) whose force is determined as function of the value of the limiting couple that could be received, said spring (55) being termed "strong return spring", the ratchet (57) having a front (57c) substantially parallel to axis of the command rod (23) when it is engaged, and a rounded back (57d) substantially parallel to the back of the pawl,
— the ratchet (57) engaging the pawl (43).

4. A device according to Claim 3, characterized in that the ratchets (57) are pivotally mounted on a movable body member (29) which is movable in translation lengthwise of the rotor (25) between an engaged position, in which the ratchets (57) engage the pawl (43), and a released position in which the command shaft (23) is able to turn freely in both senses.

5. A device according to Claim 4, characterized in that translation of the movable body member (29) is controlled by means of a coil (27) producing an electromagnetic attraction force, the strong return springs (55) of the ratchets (57) also acting as return springs to push the body member (29) towards the drive rotor (25).

FIG.1

FIG. 2

FIG. 3

FIG. 4

FIG. 5